# EUROPÄISCHE PATENTANMELDUNG

(11) **EP 1 936 786 A2**
(43) Veröffentlichungstag der Anmeldung: **25.06.2008**
(21) Anmeldenummer: 07021603.1
(22) Anmeldetag: 07.11.2007
(51) Int. Cl.: H02K 21/12, H02K 16/02

(54) **Elektrische Maschine mit Drehmomentbegrenzung**

(30) Priorität: 20.12.2006 DE 102006060987
(71) Anmelder: ROBERT BOSCH GMBH, 70469 Stuttgart (DE)
(72) Erfinder: Gröning, Ingolf, 97816 Lohr am Main (DE)
(74) Vertreter: Thürer, Andreas

(57) **Zusammenfassung**

Es ist die Aufgabe der Erfindung eine elektrische Maschine mit Drehmomentbegrenzung zu konstruieren, welche eine nur geringfügig größere Bauform als eine identische Maschine ohne Drehmomentbegrenzung hat und somit möglichst kompakt ausfällt.

Die Erfindung umfasst eine elektrische Maschine mit einem Stator 1 mit Wicklung 2 und einen relativ zum Stator 1 beweglich gelagerten Rotor 4, wobei an der Rotoroberfläche über den Umfang verteilte und sich axial erstreckende Ausnehmungen 6 vorhanden sind, wobei im Luftspalt 7 zwischen Rotor 4 und Stator 1 ein koaxial zum Rotor 4 angeordneter und sich axial erstreckender Mitnehmer 3 angeordnet ist, wobei an der dem Stator 1 zugewandten Mitnehmeroberfläche 3a Erregermagnete 5a und an der dem Rotor 4 zugewandten Mitnehmerinnenfläche 3ab Mitnehmermagnete 5b derart angeordnet sind, dass der Rotor 4 aufgrund des mittels der Statorwicklungen 2 erzeugbaren elektrischen Drehfeldes und mittels der Mitnehmermagnete 5b in Rotation versetzbar ist.

Vorteil der Erfindung ist ein kompakter und mit geringem Verschleiß behafteter Aufbau.

## Beschreibung

Die Erfindung befasst sich mit einer elektrischen Maschine und deren Anwendung als Motor oder Generator gemäß des unabhängigen Anspruches.

Elektromotoren mit Stator und Rotor sind aus dem Stand der Technik bekannt. In der Regel umfasst der Stator eine Wicklung, mit deren Hilfe ein magnetisches Drehfeld erzeugt wird, welches den mit Permanentmagneten bestückten Rotor in Rotation versetzt. Die Rotorwelle dient in der Regel als Abtrieb und kann beispielsweise eine an der Rotorwelle angeordnete Vorrichtung antreiben. Um das von der Rotorwelle ausgeübte Drehmoment zu begrenzen, sind mechanische Rutschkupplungen bekannt, wie sie auch in der Gebrauchsmusterschrift DE 1850245 U beschrieben sind. Eine derartige Rutschkupplung hat den Nachteil, dass sie aufgrund der mechanischen Realisierung sehr verschleißbehaftet ist und einen hohen Raumbedarf erfordert, was die Realisierung eines möglichst kompakten elektrischen Antriebes erschwert.

Es ist die Aufgabe der Erfindung eine elektrische Maschine mit Drehmomentbegrenzung zu konstruieren, welche einen nur geringfügig größeren Raumbedarf als eine identische Maschine ohne Drehmomentbegrenzung hat und somit möglichst kompakt ausfällt.

Diese Aufgabe wird gelöst mittels einer elektrischen Maschine mit einem Stator mit Wicklung und einem relativ zum Stator beweglich gelagerten Rotor, wobei an der Rotoroberfläche über den Umfang verteilte und sich axial erstreckende Ausnehmungen vorhanden sind, wobei im Luftspalt zwischen Rotor und Stator ein koaxial zum Rotor angeordneter und sich axial erstreckender Mitnehmer angeordnet ist, wobei an der dem Stator zugewandten Mitnehmeroberfläche Erregermagnete und an der dem Rotor zugewandten Mitnehmerinnenfläche Mitnehmermagnete derart angeordnet sind, dass der Rotor aufgrund des mittels der Statorwicklungen erzeugbaren elektrischen Drehfeldes und mittels der Mitnehmermagnete in Rotation versetzbar ist.

Aufgrund der Anordnung der mittels des Mitnehmers realisierten Drehmomentbegrenzung im Luftspalt zwischen Stator und Rotor erfordert die erfindungsgemäße Lösung, kaum mehr Bauraum als eine identische Maschine ohne Mitnehmer. Die erfindungsgemäße Lösung entkoppelt die elektrische Maschine in axialer Richtung von einer anzutreibenden Vorrichtung und begrenzt das maximal übertragbare Drehmoment. Da die Drehmomentbegrenzung ausschließlich auf magnetischer Wirkung beruht, arbeitet die Lösung weitestgehend veschleißfrei.

Vorteilhafterweise ist der Mitnehmer an der Rotorwelle gelagert. Der Mitnehmer wird hierzu rohrförmig ausgebildet, so dass er den Rotor vollständig umschließt. An den Enden des Mitnehmerrohres sind ringförmige Rohrwandungen angebracht, welche zum einen den Rohrkörper stabilisieren und zum anderen zur Aufnahme von beispielsweise Kugel- oder Zylinderlagern dienen, welche auf der Rotorwelle anliegen. Somit können die ohnehin existenten Zwischenräume zwischen Rotor und Stator bestmöglich ausgenutzt werden, was für einen kompakten Aufbau sehr förderlich ist.

Bevorzugt sind die Ausnehmungen über den Umfang der Rotoroberfläche und die Mitnehmermagnete über den Umfang der Mitnehmerinnenfläche gleich verteilt, wobei die zwischen den Ausnehmungen vorhandenen Vorsprünge und die Mitnehmermagnete gegenüberliegend angeordnet sind. Aufgrund der Anordnung der Mitnehmermagnete an der Mitnehmerinnenfläche ist die mechanische Verbindung zwischen Mitnehmermagneten und Mitnehmerinnenfläche keinen Fliehkräften ausgesetzt, so dass hohe Drehzahlen bis zu 30000min⁻¹ je nach Baugröße realisierbar sind.

Besonders bevorzugt sind die Magnete an der Mitnehmerinnenseite korrespondierend zu den Rotorausnehmungen angeordnet, was sich positiv auf die Kraftübertragung auswirkt, da dies das maximal übertragbare Drehmoment beeinflusst.

Vorteilhafterweise sind die Abmessungen der Magnete und Längsvorsprünge nach Maßgabe eines vorgegebenen Drehmomentes derart gewählt, dass sich bei Überschreitung dieses Drehmomentes die Drehzahl des Rotors gegenüber der Drehzahl des Mitnehmers verringert. Dies führt dazu, dass nach Art einer Rutschkupplung bei Überschreitung des maximalen zulässigen Drehmomentes eine Drehmomentbegrenzung einsetzt. Sobald das Drehmoment wieder unterhalb des definierten Drehmomentes liegt rastet der Mitnehmer beim nächstmöglichen Vorsprung des Rotors aufgrund der Interaktion des von den Mitnehmermagneten erzeugten Magnetfeldes und den zwischen den Längsnuten angeordneten Vorsprüngen ein und beschleunigt den Rotor wieder bis zum erneuten Erreichen des zulässigen Maximaldrehmomentes mit.

Wird ein Drehstromsynchronmotor mit magnetischer Drehmomentbegrenzung mittels einer erfindungsgemäßen elektrischen Maschine realisiert, so ist ein kompakter Aufbau und beispielsweise im Falle eines Kurzschlusses ein Schutz der mechanischen Komponenten möglich.

Wird ein Generator mit magnetischer Drehmomentbegrenzung mittels einer elektrischen Maschine realisiert, so kann das vom Generator gespeiste Netz vor plötzlichen Lastüberhöhungen geschützt werden. Treten beispielsweise in Verbindung mit einer Windkraftanlage, welche einen erfindungsgemäßen Generator umfasst, starke Windböen auf, so wäre die Drehmomentbegrenzung in der Lage das Netz oder die am Generator angeschlossene Elektronik von aus diesen Windböen resultierenden Spannungsspitzen zu entkoppeln.

### Bezugszeichenliste

| | |
|---|---|
| 1 | Stator |
| 2 | Statorwicklungen |
| 3 | Mitnehmer |
| 4 | Rotor |
| 5a | Erregermagnete |
| 5b | Mitnehmermagnete |
| 6 | Ausnehmungen |
| 7 | Luftspalt |
| 8 | Vorsprung |
| 9 | Welle |
| 10 | Lager |
| 11 | Gehäuse |
| 12 | Elektrische Maschine |

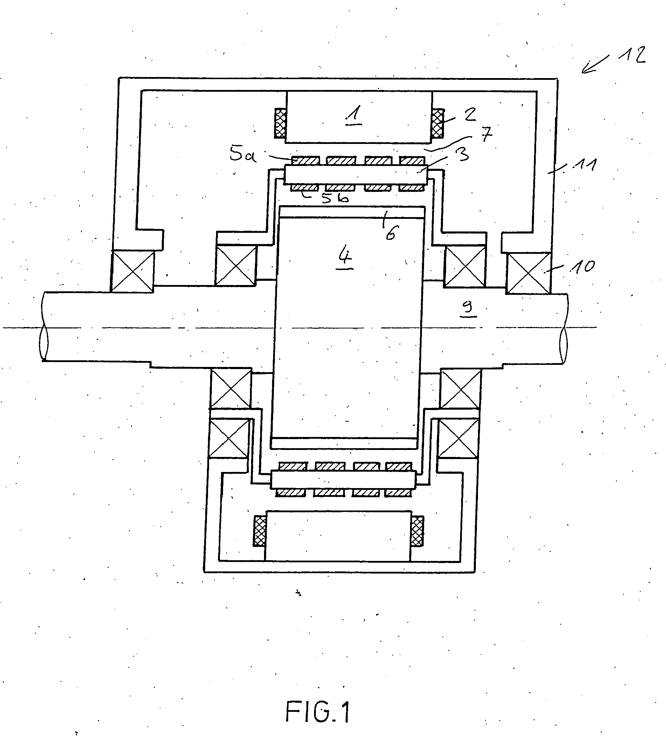

Figur 1 zeigt die erfindungsgemäße elektrische Maschine im Längsschnitt.

Das Gehäuse 11 der elektrischen Maschine 12 umfasst einen Stator 1 mit Wicklungen 2 und einen relativ zum Stator 1 beweglich gelagerten Rotor 4 mit Rotorwelle 9, wobei an der Rotoroberfläche über den Umfang verteilte und sich axial erstreckende Ausnehmungen 6 und Vorsprünge 8 vorhanden sind, wobei im Luftspalt 7 zwischen Rotor 4 und Stator 1 ein koaxial zum Rotor 4 angeordneter und sich axial erstreckender Mitnehmer 3 angeordnet ist, wobei an der dem Stator 1 zugewandten Mitnehmeroberfläche 3a Erregermagnete 5a und an der dem Rotor 4 zugewandten Mitnehmerinnenfläche 3b Mitnehmermagnete 5b angeordnet sind. Der Mitnehmer 3 ist an der Rotorwelle 4 mittels Kugel- oder Nadellagern 10 gelagert. Die Ausnehmungen 6 erstrecken sich über den Umfang der Rotoroberfläche und die Mitnehmermagnete 5b über den Umfang der Mitnehmerinnenfläche 3b axial und sind gleich verteilt. Die zwischen den Ausnehmungen 6 vorhandenen Vorsprünge 8 und die Mitnehmermagnete 5b sind gegenüberliegend angeordnet.

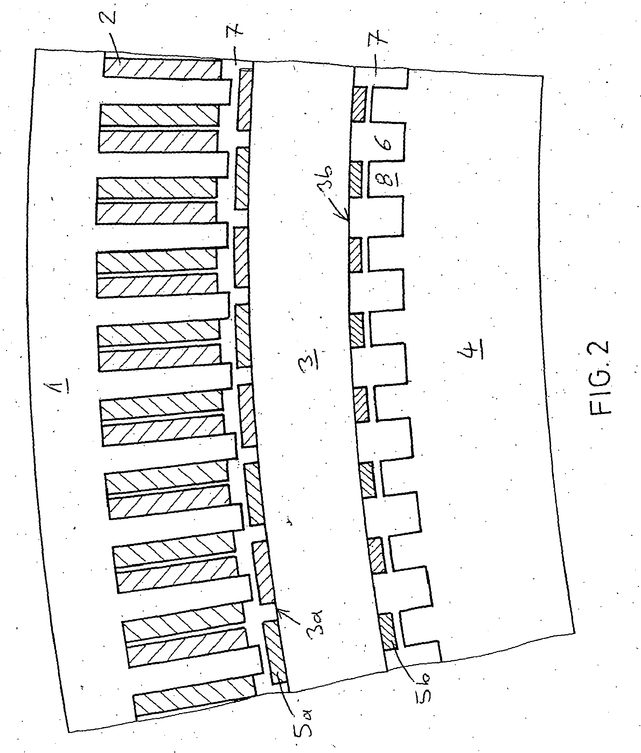

Figur 2 zeigt einen Segmentquerschnitt von Stator, Mitnehmer und Rotor.

Hier sind die erfindungsgemäßen Konstruktionsmerkmale noch detaillierter dargestellt. Es ist gezeigt der Rotor 1 mit seinen Wicklungen 2, der Mitnehmer 3 mit seinen Erregermagneten 5a und seinen Mitnehmermagneten 5b, sowie der Rotor 4 mit seinen Längsnuten 6 und Längsvorsprüngen 8. Zusätzlich ist der Luftspalt 7 zu sehen, in dem der Mitnehmer 3 angeordnet ist.

Beginnt der Mitnehmer 3 aufgrund der Interaktion zwischen Drehfeld und Erregermagneten 5a zu rotieren, so versetzt er den Rotor 4 aufgrund der Anziehungskräfte zwischen den Mitnehmermagneten 5b und den Vorsprüngen 8 mit in Bewegung. Das Drehmoment wird annähernd verschleißfrei bis zu einem maximal zulässigen Drehmoment übertragen. Der Rotor 1 wird sich dabei unterhalb der maximal zulässigen Drehzahl so ausrichten, dass aufgrund der Anziehungskraft der Mitnehmermagnete 5b die Vorsprünge 8 gegenüber den Mitnehmermagneten 5b zum liegen kommen, da hier der Luftspalt minimal ist. Sobald das maximal zulässige Drehmoment überschritten wird, nimmt der Schlupf zu und der Mitnehmer 3 dreht schneller als der Rotor 1. Bei abnehmendem Drehmoment rasten die Rotorvorsprünge 8 erneut korrespondierend zu den Mitnehmermagneten 5b ein und die Drehzahlen sind wider identisch.

Bei den in den Figuren 1 und 2 gezeigten Maschinen kann es sich um einen Drehstromsynchronmotor mit magnetischer Drehmomentbegrenzung oder um einen Generator mit magnetischer Drehmomentbegrenzung handeln. Die Erfindung ermöglicht vorteilhaft einen kompakten und geringfügig verschleißbehafteten Aufbau.

## Patentansprüche

1. Elektrische Maschine mit einem Stator (1) mit Wicklungen (2) und einem relativ zum Stator (1) beweglich gelagerten Rotor (4) **dadurch gekennzeichnet, dass** an der Rotoroberfläche über den Umfang verteilte und sich axial erstreckende Längsausnehmungen (6) vorhanden sind, wobei im Luftspalt (7) zwischen Rotor (4) und Stator (1) ein koaxial zum Rotor (4) angeordneter und sich axial erstreckender Mitnehmer (3) angeordnet ist, wobei an der dem Stator (1) zugewandten Mitnehmeroberfläche (3a) Erregermagnete (5a) und an der dem Rotor (4) zugewandten Mitnehmerinnenfläche (3b) Mitnehmermagnete (5b) derart angeordnet sind, dass der Rotor (4) bei Rotation des Mitnehmers (3) aufgrund des von den Wicklungen (2) erzeugten Drehfeldes ebenfalls in Rotation versetzbar ist.

2. Elektrische Maschine nach Anspruch 1, wobei der Mitnehmer (3) an der Rotorwelle (4) gelagert ist. '

3. Elektrische Maschine nach einem der vorhergehenden Ansprüche, wobei die Längsausnehmungen (6) über den Umfang der Rotoroberfläche und die Mitnehmermagnete (5b) über den Umfang der Mitnehmerinnenfläche (3b) gleich verteilt sind, wobei die zwischen den Längsausnehmungen (6) vorhandenen Längsvorsprünge (8) und die Mitnehmermagnete (5b) gegenüberliegend angeordnet sind.

4. Elektrische Maschine nach einem der vorhergehenden Ansprüche, wobei die Mitnehmermagnete (5b) an der Mitnehmerinnenseite (3b) korrespondierend zu den Rotorausnehmungen (6) angeordnet sind.

5. Elektrische Maschine nach einem der vorhergehenden Ansprüche, wobei die Abmessungen der Magnete (5a, 5b) und der Längsvorsprünge (8) nach Maßgabe eines Drehmomentschwellwertes dimensioniert sind, bei dessen Überschreiten sich die Drehzahl des Rotors (4) gegenüber der Drehzahl des Mitnehmers (3) verringert.

6. Drehstromsynchronmotor mit magnetischer Drehmomentbegrenzung, realisiert mittels einer elektrischen Maschine nach einem der Ansprüche 1 bis 5.

7. Generator mit magnetischer Drehmomentbegrenzung, realisiert mittels einer elektrischen Maschine nach einem der Ansprüche 1 bis 5.

8. Windkraftanlage mit Generator nach Anspruch 7.
